# FASCICULE DE BREVET EUROPEEN

(11) **EP 3 902 725 B1**
(45) Date de publication et mention de la délivrance du brevet: **03.09.2025**
(21) Numéro de dépôt: 19848966.8
(22) Date de dépôt: 18.12.2019
(51) Int. Cl.: B60T 1/06, F16D 65/22, F16H 1/20

(54) **MOTOREDUCTEUR POUR FREIN À TAMBOUR OFFRANT UNE CONFORMABILITE IMPORTANTE**
UNTERSETZUNGSGETRIEBE FÜR TROMMELBREMSE MIT HOHER UMFORMBARKEIT
REDUCTION GEARBOX FOR DRUM BRAKE, OFFERING SIGNIFICANT CONFORMABILITY

(30) Priorité: 28.12.2018 FR 1874367
(43) Date de publication de la demande: 03.11.2021
(73) Titulaire: Hitachi Astemo France, 93700 Drancy (FR)
(72) Inventeur: MOLINARO, Alberto, 93160 NOISY LE GRAND (FR); GUIGNON, Cédric, 94510 LA QUEUE EN BRIE (FR); LUU, Gérard, 93160 NOISY LE GRAND (FR); DUPAS, Christophe, 44210 PORNIC (FR)
(74) Mandataire: Brevalex
(86) Numéro de dépôt international: PCT/FR2019/053171
(87) Numéro de publication internationale: WO 2020/136329

(56) Documents cités:
- WO-A1-2018/148245
- FR-A1- 3 031 151
- KR-A- 20110 011 038
- US-A1- 2009 301 824

## Description

### DOMAINE TECHNIQUE ET ÉTAT DE LA TECHNIQUE ANTÉRIEURE

La présente invention se rapporte au domaine des freins de véhicule automobile, et plus spécifiquement à un frein à tambour comportant un ensemble motoréducteur pour actionner les segments d'un frein à tambour, offrant un encombrement réduit.

Dans l'industrie automobile, le freinage de stationnement électromécanique a pour fonction d'immobiliser le véhicule à l'arrêt afin de l'empêcher de bouger de façon inopinée. Il satisfait en outre à la disposition légale exigeant un deuxième système de freinage indépendant du système de freinage de service, généralement hydraulique, dans le véhicule et remplit d'autres fonctions de confort et de sécurité, notamment de par son aptitude à l'autodiagnostic.

Le document WO2018/148245A1 décrit un ensemble actionneur électrique pour un ensemble de frein à tambour. Cet ensemble utilise un moteur électrique pour activer des garnitures de frein via un écrou à engrenages entraîné par une réduction de vitesse, qui est elle-même actionnée par l'arbre de sortie du moteur électrique.

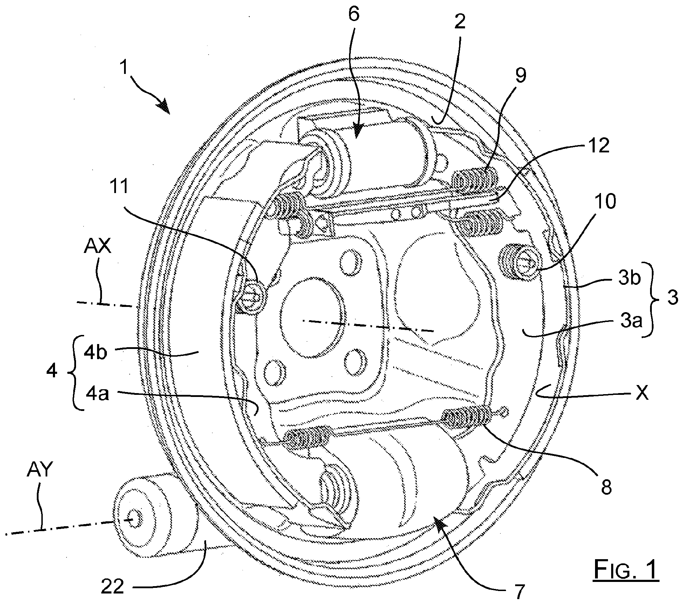

Il est connu du document FR3016015 d'implanter au sein d'un frein à tambour, un actionneur mécanique en plus de l'actionneur hydraulique prévu initialement. Un tel frein à tambour, repéré par 1 sur la figure 1, comporte un plateau 2 de révolution d'axe AX équipé d'un premier et d'un second segment en arc de cercles 3 et 4 mobiles radialement pour pouvoir être pressés contre la face interne cylindrique d'un tambour non représenté.

Les segments 3 et 4 comportent chacun une âme 3a, 4a en tôle plane en forme de portion de couronne circulaire qui porte une garniture de freinage 3b, 4b, et sont montés diamétralement opposés avec leurs extrémités en appui à fois sur un cylindre de roue 6 hydraulique et sur un actionneur mécanique 7 portés par le plateau 2. Ces segments 3 et 4 sont en outre rappelés l'un vers l'autre par deux ressorts de rappel 8 et 9, et plaqués contre le plateau 2 chacun par un ressort 10, 11.

Une biellette de rattrapage d'usure 12 s'étend le long du cylindre de roue 6 en ayant une première extrémité en appui sur l'âme 3a du premier segment 3 et une seconde extrémité en appui sur l'âme 4a du second segment 4.

Le cylindre de roue 6 est destiné à être actionné lors d'une utilisation du frein à tambour 1 selon un premier mode de fonctionnement dit "simplex", qui assure un freinage progressif particulièrement adapté pour freiner le véhicule en service. Il comprend une chambre hydraulique fermée à ses extrémités par deux pistons qui s'écartent l'un de l'autre lorsque la pression hydraulique augmente et pousse les extrémités associées des segments 3 et 4.

L'actionneur mécanique 7 assure quant à lui le freinage de stationnement et de secours en écartant les extrémités associées des segments pour assurer un blocage rapide et puissant des roues du véhicules selon un mode de fonctionnement dit "duo-servo", notamment quand le cylindre de roue 6 est inactif. Cet actionneur est entrainé par un moteur électrique 21 d'axe AY.

En pratique, l'une des difficultés associées à l'utilisation d'un actionneur mécanique réside dans la nécessité de convertir une vitesse rotation élevée associée à un faible couple du moteur électrique, en un faible déplacement avec un effort suffisant. A cet effet, le document FR3016015 enseigne de prévoir un module de réduction qui transmet une rotation du moteur 21, plus précisément une rotation d'un pignon moteur d'axe AY entraîné directement par ce moteur, à l'actionneur mécanique 7. Ce module de réduction est centré sur l'axe AY et comprend plusieurs étages de trains épicycloïdaux d'axe AY afin d'assurer une démultiplication de vitesse efficace entre sa sortie mesurée au niveau d'un pignon de sortie d'axe AY s'accouplant à l'actionneur mécanique 7 et son entrée mesurée au niveau du pignon moteur. En outre, le moteur 21 et le module de réduction sont logés ensemble dans un boitier cylindrique.

L'association du moteur 21 et du module de réduction impose de disposer l'axe du moteur parallèlement aux axes des trains épicycloïdaux, et l'axe du module de réduction parallèlement aux axes des roues dentées de l'actionneur mécanique 7. Il en résulte un encombrement important du motoréducteur.

Or l'espace disponible au niveau des roues est relativement réduit. En outre cet espace est très variable en taille et en forme suivant le modèle de véhicule. Il est alors souhaitable de disposer d'un motoréducteur d'encombrement réduit facilitant son intégration sur différents modèles de véhicule.

### EXPOSÉ DE L'INVENTION

C'est par conséquent un but de la présente invention d'offrir un motoréducteur, par exemple pour actionner un frein de parking d'un frein à tambour, présentant une architecture le rendant adaptable à des espaces disponibles de forme et de taille variables.

Le but énoncé ci-dessus est atteint par un motoréducteur comportant un train d'engrenages à contact extérieur, le train d'engrenages comprenant des engrenages étagés. Chaque engrenage étagé comporte un pignon et une roue dentée coaxiaux, superposés solidaires en rotation, le pignon d'un engrenage étagé engrenant dans la roue dentée d'un engrenage étagé adjacent. Les axes des pignons et roues dentées sont parallèles.

Grâce à l'invention, la disposition des engrenages étagés les uns par rapport aux autres est relativement libre. La forme générale du réducteur peut alors être adaptée à la configuration de l'espace disponible. En effet le réducteur peut par exemple avoir une forme relativement rectiligne, une forme courbe, voire une forme en S. La structure d'un tel réducteur offre donc une certaine liberté dans le choix de la forme extérieure du motoréducteur

En outre, le réducteur peut être avantageusement relativement fin et plat dans la direction des axes des pignons et roues dentées. Ainsi il peut être disposé dans des espaces réduits.

Dans un exemple, l'axe du moteur électrique est parallèle aux axes des engrenages et roues dentées. Dans un exemple particulièrement avantageux, l'axe du moteur est sécant aux axes des engrenages étagés, et un renvoi d'angle connecte le moteur au réducteur. Le moteur peut alors être disposé en continuité du train d'engrenages et le motoréducteur peut offrir une forme encore plus facilement intégrable.

En d'autres termes, on réalise un module de réduction comportant une cascade de pignons et roues dentées, avantageusement formés par des engrenages étagés, pouvant être déployés selon des formes très variées pour s'adapter à la géométrie de l'espace disponible.

La présente invention a alors pour objet un frein à tambour comportant un tambour, un plateau, deux segments, un actionneur mécanique d'un frein de parking du frein à tambour fixé sur le plateau et un motoréducteur pour l'actionneur mécanique, le motoréducteur comportant un moteur électrique comprenant un arbre de sortie s'étendant selon un premier axe, et un réducteur comportant un axe de sortie s'étendant selon un deuxième axe, dont ledit réducteur comporte des engrenages étagés à engrènement tangentiel, chaque engrenage étagé comportant chacun une roue dentée et un pignon coaxiaux superposés et solidaires entre eux en rotation, lesdits engrenages étagés étant montés mobiles en rotation autour d'axes parallèles entre eux,dans lequel le motoréducteur est monté sur le plateau de sorte que les axes autour desquels sont montés libres en rotation les engrenages étagés sont parallèles à l'axe du tambour.

De préférence, le réducteur comporte uniquement des engrenages étagés.

Les engrenages étagés sont avantageusement au moins en partie alternés de sorte que le motoréducteur présente une forme générale sensiblement plate.

Le réducteur peut comporter une platine et les axes autour desquels les engrenages étagés sont montés libres en rotation, peuvent être solidaires de la platine.

Dans un exemple de réalisation, la platine comporte au moins deux portions disposées dans des plans parallèles distincts.

Le motoréducteur comporte avantageusement un boitier comprenant une première partie formant un fond et une deuxième partie formant un couvercle, la platine étant disposée dans le fond du boîtier.

Par exemple, le réducteur comporte entre quatre à six engrenages étagés.

Dans un exemple de réalisation, l'arbre de sortie du moteur électrique est orthogonal aux axes autour desquels sont aptes à tourner les engrenages étagés.

De préférence, le motoréducteur comporte un renvoi d'angle comprenant un engrenage à roue plate entre l'arbre de sortie et le réducteur.

L'axe de sortie du réducteur peut être parallèle aux axes autour desquels sont montés libres en rotation les engrenages étagés.

La présente invention a également pour objet un procédé de réalisation d'un motoréducteur pour un frein à tambour selon l'invention, dans lequel le réducteur comporte une platine et dans lequel les axes autour desquels les engrenages étagés sont montés libres en rotation, sont solidaires de la platine, comportant :
- la fabrication de la platine et des axes solidairement à la platine,
- la mise en place des engrenages étagés autour des axes,
- la fourniture d'un boîtier comportant un fond et un couvercle,
- la mise en place de la platine munie des engrenages étagés dans le fond du boitier,
- la mise en place du couvercle du boîtier.

La présente invention a également pour objet un procédé de réalisation d'un frein à tambour à actionnement électromécanique selon l'invention comportant :
- la réalisation d'un frein à tambour comportant un tambour, un plateau, deux segments, un actionneur mécanique d'un frein de parking du frein à tambour fixé sur le plateau,
- la réalisation d'un motoréducteur selon le procédé précédent,
- la mise en place du motoréducteur de sorte que l'engrenage étagé en sortie du réducteur entraîne via un renvoi d'angle une roue dentée de l'actionneur mécanique, et de sorte que les axes autour desquels sont montés libres en rotation les engrenages étagés sont parallèles à l'axe du tambour,
- la fixation du motoréducteur sur le plateau du frein à tambour.

### BRÈVE DESCRIPTION DES DESSINS

La présente invention sera mieux comprise à l'aide de la description qui va suivre et des dessins en annexes sur lesquels :
La figure 1 est une vue en perspective d'un frein à tambour à actionneur de frein de parking électrique selon l'état de la technique.
La figure 2A est une vue en perspective d'un frein à tambour muni d'un motoréducteur selon un exemple de réalisation de la présente invention, le tambour et le couvercle du boîtier du motoréducteur n'étant pas représentés.
La figure 2B est en vue en perspective du frein de la figure 2A sur laquelle l'actionneur mécanique est visible ainsi que le renvoi d'angle entre le réducteur et l'actionneur mécanique.
La figure 3 est une vue de détail de la figure 2 au niveau du renvoi d'angle en sortie du moteur.
La figure 4 est une vue de côté du renvoi d'angle de la figure 3.
La figure 5 est une représentation en perspective du montage d'un du motoréducteur et du frein à tambour sur le châssis d'un véhicule, le tambour étant omis.
La figure 6 est une vue en perspective d'un frein à tambour muni d'un motoréducteur selon un autre exemple de réalisation de la présente invention, le tambour et le couvercle du boîtier du motoréducteur n'étant pas représentés.

### EXPOSÉ DÉTAILLÉ DE MODES DE RÉALISATION PARTICULIERS

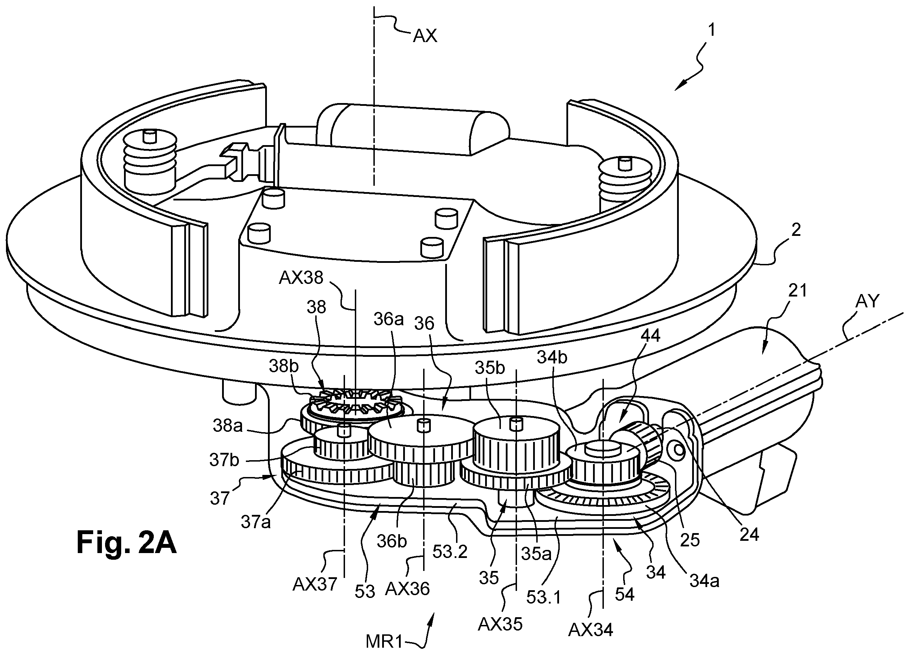

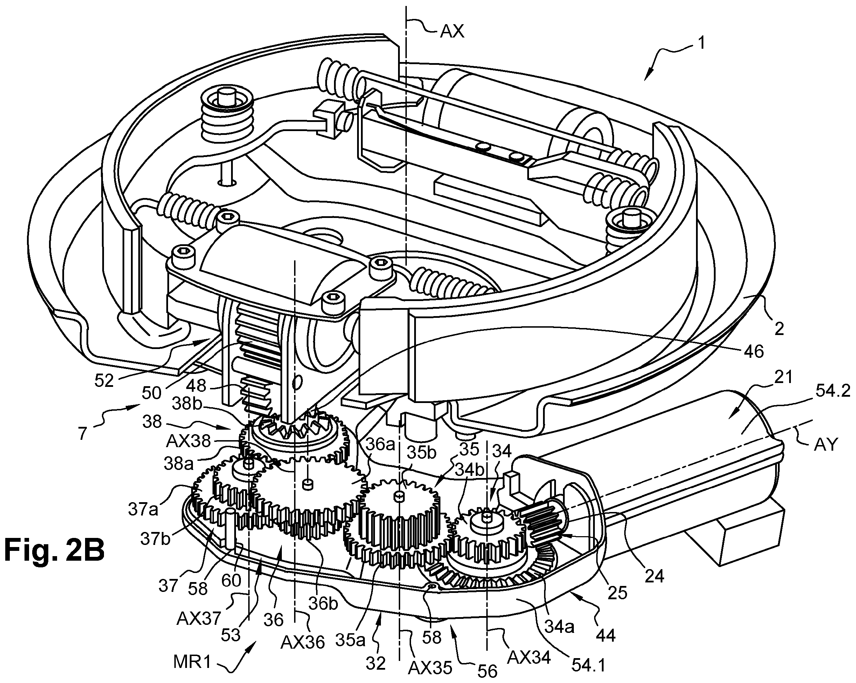

Sur les figures 2A et 2B, on peut voir une vue en perspective d'un exemple avantageux d'un motoréducteur MR1 selon l'invention associé à un frein à tambour 1 comportant un actionneur 7 de frein de parking électrique.

Le motoréducteur MR1 comporte un moteur électrique 21 et un module de transmission ou réducteur 32.

Dans l'exemple représenté, le moteur électrique 21 et son arbre de sortie 24 s'étendent le long d'axe AY et l'axe de sortie du module de transmission 32s'étend selon un axe AZ orthogonal aux axes AY et AZ.

Dans cet exemple, le module de transmission est prévu pour s'étendre parallèlement au plateau 2.

La chaîne cinématique du module de transmission se présente sous la forme d'une réduction dite composée dans lequel les éléments d'engrenage se présentent sous la forme d'un train linéaire d'engrenages étagés à contact extérieur, de préférence au nombre de quatre à six. Dans l'exemple des figures 2A et 2B, on dénombre cinq engrenages étagés 34, 35, 36, 37 et 38.

Les engrenages étagés 34, 35, 36 et 37 comprennent respectivement un premier étage sous la forme d'une roue dentée 34a, 35a, 36a, 37a et un second étage sous la forme d'un pignon 34b, 35b, 36b, 37b lié rigidement à la roue dentée correspondante avec un diamètre inférieur à celle-ci. L'engrenage 38 comporte une roue dentée 38a et une couronne dentée 38b.

Les engrenages étagés 34, 35, 36, 37 et 38 sont prévus chacun pour être montés à rotation autour d'un axe distinct fixe AX34, AX35, AX36, AX37 et AX38, chacun de ces axes étant parallèles entre eux et disposés dans cet ordre suivant la direction de la réduction, i.e. depuis le pignon moteur jusqu'à l'actionneur mécanique 7. Ils sont notamment dimensionnés de façon à ce que le pignon formant la sortie d'un engrenage engrène dans la roue dentée de l'engrenage suivant, avec la roue dentée 34a formant l'élément d'entrée de la chaîne cinématique, tandis que le pignon 38b forme l'élément de sortie de cette chaîne. Les axes physiques AX34, AX35, AX36, AX37 et AX38 sont schémtisés par les axes géométriques.

La mise en œuvre d'un réducteur sous la forme d'un train à engrenages étagées offre une grande liberté dans la forme que peut prendre le réducteur. En effet, la disposition relative des axes des engrenages étagés est libre, seules étant fixées les distances entre les axes assurant un engrènement tangentiel d'un pignon et d'une roue dentée. Par conséquent, le train d'engrenages peut présenter une forme plus ou moins déployée et ainsi peut être adapté au mieux à l'environnement disponible autour de la roue. Dans l'exemple représenté, les axes des engrenages sont disposés sensiblement le long d'un arc ce cercle, cet arc de cercle pouvant présenter un rayon de courbure plus ou moins important. En effet le train d'engrenages peut être plus ou moins déroulé tout en conservant le taux de réduction. Dans d'autres exemples de réalisation, les axes des engrenages sont disposés le long d'une courbe en S ou le long d'une droite.

En outre, la mise en œuvre d'engrenages étagés permet de réduire la longueur de la chaîne de réduction et donc de réduire le porte-à-faux du moteur qui pourrait être dommageable à long terme pour le fonctionnement du motoréducteur et donc du frein.

Néanmoins, un module de transmission comportant des pignons et des roues dentées simples engrenant des engrenages étagés ne sort pas du cadre de la présente invention.

En outre, une ou plusieurs roues folles peuvent être ajoutées au sein de la chaîne de réduction sans modifier le rapport de réduction, par exemple pour allonger la chaîne de réduction en vue de déporter davantage le moteur.

De manière très avantageuse et comme cela est représenté sur les figures 2A et 2B, tout ou partie des engrenages étagés est alterné. Sur la figure 2A, les pignons 35b et 37b sont du même côté que la roue dentée 36a. Ainsi, le réducteur peut être relativement plat et fin, ce qui lui permet de pouvoir être plus facilement intégré le long du tambour. Le motoréducteur a une épaisseur comprise par exemple entre 1 cm et 8 cm, de préférence entre 1,5 cm et 5 cm, de manière encore préférée entre 2 cm et 3 cm, par exemple une épaisseur égale à 2,5 cm.

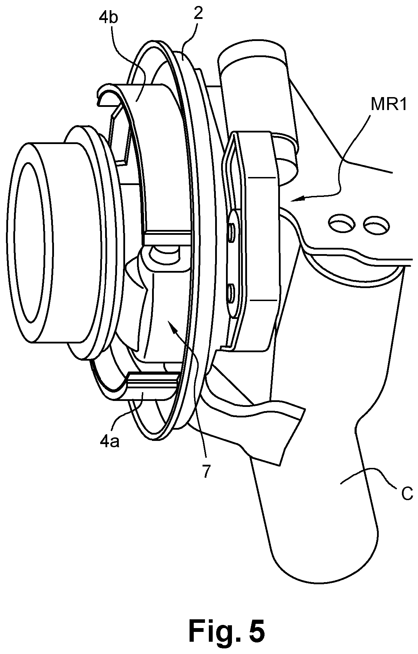

Sur la figure 5, on peut voir le motoréducteur logé entre le plateau 2 du frein à tambour auquel il est fixé et le châssis C du véhicule automobile. On constate que la forme plate et allongée du motoréducteur lui permet d'être logé dans un espace étroit et en outre permet de disposer le moteur dans une zone plus large pour recevoir le moteur. Le réducteur selon l'invention permet avantageusement un déport du moteur par rapport à l'actionneur mécanique du frein à tambour. Comme décrit ci-dessus, ce déport peut être ajusté par exemple en allongeant la chaîne de réduction en insérant une ou des roues folles dans la chaîne de réduction.

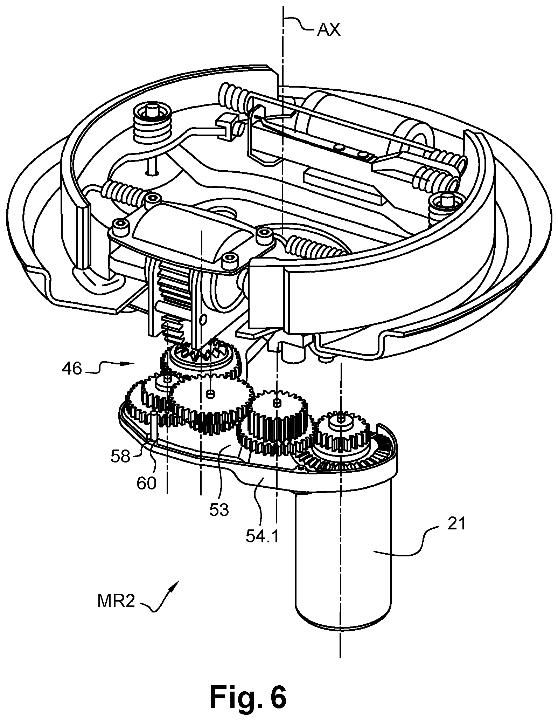

De manière très avantageuse, les axes AX34 à AX38 autour desquels les engrenages étagés tournent sont solidaires d'une platine 53 unique visible sur la figure 6, qui est montée dans le fond d'un boîtier 54 logeant le train d'engrenages. Les axes sont perpendiculaires à la platine. Par exemple ils sont réalisés d'un seul tenant avec la platine 53 par moulage ou ils sont en matériau métallique et sont surmoulés dans une platine en matériau plastique ou ils sont rapportés sur celle-ci. De préférence, la platine 53 est en tôle métallique, avantageusement en acier.

Dans un exemple de réalisation, les axes sont directement solidaires du boîtier, aucune platine n'est alors mise en œuvre.

Dans l'exemple représenté, la platine comporte deux portions 53.1 et 53.2 s'étendant dans deux plans parallèles. Les axes AX34 et AX35 sont fixés à la portion 53.1 et les axes AX36, AX37 et AX38 sont fixés à la portion 53.2. Cette disposition en plusieurs plans est rendu possible du fait du degré de liberté offert par l'engrènement des pignons et roues dentées dans la direction des axes des engrenages étagés. Cette possibilité de répartir les axes dans plusieurs plans parallèle offre une liberté supplémentaire pour adapter la forme du réducteur à l'environnement. En effet, si l'environnement requiert un boîtier avec un ou plusieurs décrochements, la platine 53 peut être conformée pour suivre ces décrochements sans que soit modifié les propriétés de réduction de la chaîne d'engrenages étagés. Dans un exemple, la platine comporte trois portions, deux portions dans un même plan et une autre portion dans un plan différent et parallèle au plan des deux portions, et reliant les deux portions.

Le réducteur selon l'invention offre à la fois une grande liberté de forme dans le plan orthogonal aux axes des engrenages et également dans la direction des axes des engrenages étagés.

La mise en œuvre d'une platine unique présente l'avantage de pouvoir réaliser la chaîne de réduction préalablement et de pouvoir la monter simplement dans le boîtier.

De manière très avantageuse, le boîtier loge à la fois le moteur et le réducteur, ce qui simplifie l'assemblage du motoréducteur et la réalisation des étanchéités. Dans l'exemple représenté, le boîtier comporte deux parties, une première partie 54.1 comportant le fond sur lequel repose la platine 53 portant les axes des engrenages étagés et une deuxième partie 54.1 formant couvercle. De manière très avantageuse, le fond 54.1 loge à la fois le moteur et le réducteur et le couvercle 54.2 recouvre à la fois le moteur et le réducteur.

Dans l'exemple des figures 2A et 2B, le fond présente un décrochement. La forme du capot peut également être adaptée à l'environnement et/ou aux contours des engrenages.

La première et la deuxième partie peuvent être symétriques par rapport à un plan passant par la zone de jonction entre la première et la deuxième partie.

Le boîtier est avantageusement réalisé par moulage de matière plastique.

De manière avantageuse, le boîtier 54 comporte des moyens 56 pour fixer le motoréducteur au frein à tambour, plus particulièrement le réducteur au plateau afin de limiter les déplacements du moteur réducteur qui pourraient l'endommager et/ou générer un bruit indésirable. Par exemple, les moyens 56 pour fixer le motoréducteur au plateau comportent des passages de vis 58 traversant le boîtier 54 dans la direction X à l'extérieur des engrenages, et dans lesquels sont destinées à être montées des vis coopérant avec des ouvertures correspondantes prévues dans le plateau.

De manière avantageuse, les passages de vis 58 forment des moyens de positionnement de la platine par rapport au fond 54.2 du boîtier. Dans l'exemple représenté, les passages de vis comportent des tubes issus de matière avec le fond 54.2 du boîtier et des encoches 60 sont formées dans le bord extérieur de la platine 53. Les encoches et reçoivent les tubes des passages de vis.

En variante, des moyens de positionnement distincts des passages de vis sont envisageables.

De manière très avantageuse et comme cela est représenté sur les figures 2A et 2B, l'axe du moteur électrique est orthogonal aux axes des engrenages étagés, il s'étend ainsi dans la continuité de la forme train d'engrenages dans le plan. Le motoréducteur présente alors une forme qui peut suivre le bord périphérique du tambour autour de l'essieu. Dans cet exemple, le motoréducteur MR1 comporte un premier renvoi d'angle 44 reliant le moteur 21 et le module de transmission 32 et un deuxième renvoi d'angle 46 reliant la sortie du module de transmission et l'actionneur 7.

Le premier renvoi d'angle 44 est avantageusement de type engrenage à roue plate et comporte un pignon 25 et une roue dentée plate 34a, le pignon 25 engrenant dans la roue dentée plate 34a. Le pignon 25 est en prise avec l'arbre de sortie 24 du moteur électrique 21.

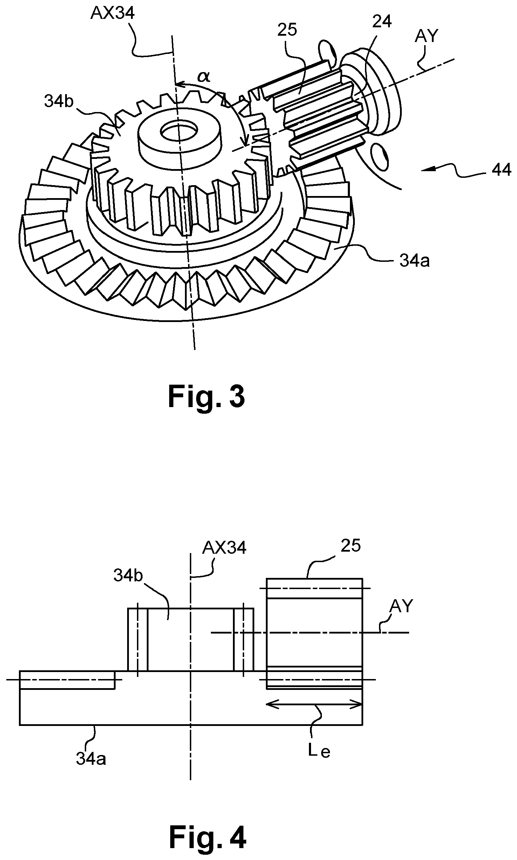

La roue dentée plate 34a comporte une roue dont la denture est formée en couronne sur une face de la roue. Sur la figure 3, on peut voir représenté seul l'engrenage à roue plate.

Le renvoi d'angle à roue plate offre l'avantage d'offrir une liberté dans l'orientation de l'axe du pignon 25 par rapport à l'axe de la roue dentée 34a, i.e. une grande liberté dans le choix de l'angle du renvoi d'angle. En effet l'angle α entre l'axe AX34 et l'axe AY peut varier par exemple de 30° à 135°. Ainsi on dispose d'un grand choix d'orientations entre le moteur et le module de transmission, pour adapter la forme du motoréducteur à celle de l'espace disponible. En outre les contraintes au niveau de la précision de montage sont réduites.

De plus, la position des dents du pignon 25 par rapport aux dents de la roue dente 34a peut varier. Sur la figure 4, la longueur d'engrènement Le correspond à la longueur de la zone d'engagement des dents du pignon avec les dents de la roue dentée 34a. Le pignon 25 peut être disposé par rapport à la roue dentée avec un jeu j. Le jeu j est compris par exemple entre +/- 1/100 mm et +/- 10 mm, avantageusement entre +/- 1/10 mm et +/- 5mm, de manière préférée entre +/- 1 mm et +/- 3 mm et de manière encore plus préférée entre +/-2mm
Cette jeu de montage permis par l'engrenage à roue plate participe à offrir une plus grande liberté dans l'agencement des différents éléments du motoréducteur. Les contraintes de précision de montage sont également davantage relâchées.

De plus un renvoi d'angle comportant un engrenage à roue plate offre une efficacité de l'ordre 97% à 99%. Par comparaison, l'efficacité d'un renvoi d'angle à roue conique est inférieure d'environ 30% de celle d'un renvoi d'angle à roue plate.

Dans l'exemple représenté et de manière avantageuse, le deuxième renvoi d'angle est également à roue plate. La roue dentée 38a qui est entraînée par le pignon 37b, porte sur une de ses faces, la face supérieure dans la représentation des figures 2A et 2B, le pignon 38b qui engrène une roue dentée 50 d'un engrenage de transmission 52 qui transmet la rotation du motoréducteur à l'actionneur 7. L'engrenage de transmission 52 comporte des roues 48, 50 à axes parallèles.

Le pignon 38b comporte une couronne dentée. Le pignon 38b et la roue dentée 48 forment l'engrenage à roue plate du deuxième renvoi d'angle de l'actionneur.

Dans l'exemple représenté, l'engrenage de transmission 52 comporte la roue dentée 48 et une roue dentée 50, qui provoque l'écartement de pistons en appui sur des extrémités des segments de frein et écarte ceux-ci en direction du tambour.

Selon une variante, les premier et deuxième renvois d'angle sont des renvois d'angle coniques. Selon une autre variante l'un des renvois d'angle est à roue plate et l'autre est un renvoi d'angle conique.

Sur la figure 6, on peut voit un autre exemple de motoréducteurs MR2 selon l'invention comportant un renvoi d'angle 46 uniquement en sortie. Dans cet exemple, l'arbre de sortie du moteur électrique entraîne directement la roue dentée 34a. La réduction de chaque couple roue dentée/pignon engrenées est adaptée afin que la réduction totale soit celle attendue. En effet dans cet exemple un étage de réduction est supprimé par rapport à l'exemple des figures 2A et 2B.

Dans un autre exemple non représenté, la roue dentée en sortie engrène directement les dents de roue dentée de l'actionneur. Dans ce cas, les axes des engrenages étagés sont orthogonaux aux axes des engrenages étagés des figures 2A et 2B.

Ainsi le motoréducteur selon la présente invention peut être facilement intégré à des espaces au niveau des roues de forme et de taille très variées, et donc peut être appliqué à différentes modèles de véhicule. L'adaptation de celui-ci à un espace donné est relativement aisé, en effet la forme du motoréducteur peut être modifié en changeant la disposition relative des axes des engrenages étagés sans que les caractéristiques du réducteur, telles que le taux de réduction fourni par celui-ci, soient modifiées. Cette adaptation ne nécessite pas de nouveaux développements longs et coûteux.

### REFERENCES

1 : frein à tambour
2 : plateau
3 : premier segment
4 : second segment
3a, 4a : âmes
3b, 4b : garnitures de freinage
6 : cylindre de roue hydraulique
7 : actionneur mécanique
8, 9 : ressorts de rappel
10, 11 : ressorts latéraux
12 : biellette de rattrapage d'usure
21 : moteur électrique
24 : arbre de sortie
25 : pignon
32 : réducteur
34 ; 35, 36, 37, 38 : engrenages étagés
34a, 35a, 36a, 37a, 38a : roues dentées
34b, 35b, 3.6b, 37b, 38b : pignons
44 : premier renvoi d'angle
46 : deuxième renvoi d'angle
48 : engrenage de transmission
50, 52 : roues dentées de l'engrenage de transmission
53 : platine
53.1, 53.2 : portions de la platine
54 : boîtier
54.1 : première partie du boîtier
56 : moyens pour fixer le motoréducteur sur le plateau
58 : passages de vis
60 : encoches
AX, AY : axes
AX34, AX35, AX36, AX37, AX38 axes des engrenages 34 ; 35, 36, 37, 38
C : châssis
Le : longueur d'engrènement
MR1, MR2 : motoréducteur

## Revendications

1. Frein à tambour comportant un tambour, un plateau (2), deux segments (3, 4), un actionneur mécanique (7) d'un frein de parking du frein à tambour fixé sur le plateau (2) et un motoréducteur pour l'actionneur mécanique (7), le motoréducteur comportant un moteur électrique (21) comprenant un arbre de sortie (24) s'étendant selon un premier axe, et un réducteur (32) comportant un axe de sortie s'étendant selon un deuxième axe, **caractérisé en ce que** ledit réducteur (32) comporte des engrenages étagés (34, 35, 36, 38, 38) à engrènement tangentiel, chaque engrenage étagé comportant chacun une roue dentée et un pignon coaxiaux superposés et solidaires entre eux en rotation, lesdits engrenages étagés (34, 35, 36, 37, 38) étant montés mobiles en rotation autour d'axes (AX34, AX35, AX36, AX37, AX38) parallèles entre eux,
dans lequel le motoréducteur est monté sur le plateau de sorte que les axes (AX34, AX35, AX36, AX37, AX38) autour desquels sont montés libres en rotation les engrenages étagés (34, 35, 36, 37, 38) sont parallèles à l'axe du tambour.

2. Frein à tambour selon la revendication 1, dans lequel le réducteur (32) comporte uniquement des engrenages étagés (34, 35, 36, 37, 38).

3. Frein à tambour selon la revendication 1 ou 2, dans lequel les engrenages étagés sont au moins en partie alternés.

4. Frein à tambour selon la revendication 3, dans lequel le motoréducteur comprend un train d'engrenages étagés (34, 35, 36, 38, 38) à engrènement tangentiel, chaque engrenage étagé comportant chacun une roue dentée et un pignon coaxiaux superposés et solidaires entre eux en rotation, le pignon d'un engrenage étage engrenant la roue dentée d'un étage adjacent, les engrenages étagés (34, 35, 36, 37, 38) étant montés mobiles en rotation autour d'axes (AX34, AX35, AX36, AX37, AX38) parallèles entre eux.

5. Frein à tambour selon l'une quelconque des revendications 1 à 4, dans lequel le réducteur (32) comporte une platine (53) et dans lequel les axes (AX34, AX35, AX36, AX37, AX38) autour desquels les engrenages étagés (34, 35, 36, 37, 38) sont montés libres en rotation, sont solidaires de la platine (53).

6. Frein à tambour selon la revendication 5, dans lequel la platine (53) comporte au moins deux portions (53.1, 53.2) disposées dans des plans parallèles distincts.

7. Frein à tambour selon la revendication 5 ou 6, comportant un boitier (54) comprenant une première partie (54.1) formant un fond et une deuxième partie formant un couvercle, la platine (53) étant disposée dans le fond du boîtier (54).

8. Frein à tambour selon l'une des revendications 1 à 7, dans lequel le réducteur (32) comporte entre quatre à six engrenages étagés (34, 35, 36, 37, 38).

9. Frein à tambour selon l'une des revendications 1 à 8, dans lequel l'arbre de sortie du moteur électrique (21) est orthogonal aux axes (AX34, AX35, AX36, AX37, AX38) autour desquels sont aptes à tourner les engrenages étagés (34, 35, 36, 37, 38).

10. Frein à tambour selon la revendication 9, comportant un renvoi d'angle (44) comprenant un engrenage à roue plate entre l'arbre de sortie et le réducteur (32).

11. Frein à tambour selon l'une des revendications 1 à 10, dans lequel l'axe de sortie du réducteur (32) est parallèle aux axes (AX34, AX35, AX36, AX37, AX38) autour desquels sont montés libres en rotation les engrenages étagés (34, 35, 36, 37, 38).

12. Frein à tambour selon l'une des revendications 1 à 11, dans lequel l'arbre de sortie (24) du moteur électrique (21) s'étend le long d'un axe (AY) qui est orthogonal à l'axe de sortie (AX) du réducteur (32).

13. Procédé de réalisation d'un motoréducteur pour un frein à tambour selon la revendication 5, comportant :
- la fabrication de la platine (53) et des axes (34, 35, 36, 37, 38) solidairement à la platine,
- la mise en place des engrenages étagés (34, 35, 36, 37, 38) autour des axes (AX34, AX35, AX36, AX37, AX38),
- la fourniture d'un boîtier (54) comportant un fond (54.1) et un couvercle (54.2),
- la mise en place de la platine (53) munie des engrenages étagés (34, 35, 36, 37, 38) dans le fond (54.1) du boitier (54),
- la mise en place du couvercle (54.2) du boîtier (54).

14. Procédé de réalisation d'un frein à tambour à actionnement électromécanique comportant :
- la réalisation d'un frein à tambour comportant un tambour, un plateau (2), deux segments (3, 4), un actionneur mécanique (7) d'un frein de parking du frein à tambour fixé sur le plateau (2),
- la réalisation d'un motoréducteur selon le procédé selon la revendication 13,
- la mise en place du motoréducteur de sorte que l'engrenage étagé en sortie du réducteur entraîne via un renvoi d'angle une roue dentée de l'actionneur mécanique, et de sorte que les axes (AX34, AX35, AX36, AX37, AX38) autour desquels sont montés libres en rotation les engrenages étagés (34, 35, 36, 37, 38) sont parallèles à l'axe du tambour,
- la fixation du motoréducteur sur le plateau du frein à tambour.

## Patentansprüche

1. Trommelbremse bestehend aus Trommel, einer Platte (2), zwei Segmenten (3, 4), einem an der Platte (2) befestigten mechanischen Aktuator (7) einer Feststellbremse der Trommelbremse und einem Getriebemotor für den mechanischen Aktuator (7), wobei der Getriebemotor einen Elektromotor (21) umfasst, der eine Abtriebswelle (24) umfasst, die sich entlang einer ersten Achse erstreckt, und ein Getriebe (32), das eine Abtriebsachse umfasst, die sich entlang einer zweiten Achse erstreckt, **dadurch gekennzeichnet, dass** das Getriebe (32) Stufenzahnräder (34, 35, 36, 38, 38) mit tangentialer Verzahnung umfasst, wobei jedes Stufenzahrad jeweils ein Zahnrad und ein Ritzel aufweist, die koaxial übereinander liegen und drehfest miteinander verbunden sind, wobei die Stufenzahnräder (34, 35, 36, 37, 38) drehbar um parallel zueinander liegenden Achsen (AX34, AX35, AX36, AX37, AX38) montiert sind,
wobei der Getriebemotor so auf der Platte montiert ist, dass die Achsen (AX34, AX35, AX36, AX37, AX38), um die die Stufenzahnräder (34, 35, 36, 37, 38) frei drehend montiert sind, parallel zur Trommelachse liegen.

2. Trommelbremse nach Anspruch 1, wobei das Getriebe (32) nur Stufenzahnräder (34, 35, 36, 37, 38) aufweist.

3. Trommelbremse nach Anspruch 1 oder 2, wobei die Stufenzahnräder mindestens teilweise abwechselnd angeordnet sind.

4. Trommelbremse nach Anspruch 3, wobei der Getriebemotor einen Satz an Stufenzahnrädern (34, 35, 36, 38, 38) mit tangentialer Verzahnung umfasst, wobei jedes Stufenzahnrad jeweils ein Zahnrad und ein Ritzel aufweist, die koaxial übereinander liegen und drehfest miteinander verbunden sind, wobei das Ritzel eines Stufenzahnrades das Zahnrad einer benachbarten Stufe in Eingriff nimmt, wobei die Stufenzahnräder (34, 35, 36, 37, 38) drehbar um parallel zueinander liegende Achsen (AX34, AX35, AX36, AX37, AX38) montiert sind.

5. Trommelbremse nach einem der Ansprüche 1 bis 4, wobei das Getriebe (32) eine Platte (53) aufweist und wobei die Achsen (AX34, AX35, AX36, AX37, AX38), um die die Stufenzahnräder (34, 35, 36, 37, 38) frei drehend montiert sind, fest mit der Platte (53) verbunden sind.

6. Trommelbremse nach Anspruch 5, wobei die Platte (53) mindestens zwei in getrennten parallelen Ebenen angeordnete Abschnitte (53.1, 53.2) aufweist.

7. Trommelbremse nach Anspruch 5 oder 6, die ein Gehäuse (54) aufweist, das einen ersten Teil (54.1) umfasst, der einen Boden bildet, und einen zweiten Teil, der eine Abdeckung bildet, wobei die Platte (53) im Boden des Gehäuses (54) angeordnet ist.

8. Trommelbremse nach einem der Ansprüche 1 bis 7, wobei das Getriebe (32) zwischen vier und sechs Stufenzahnräder (34, 35, 36, 37, 38) aufweist.

9. Trommelbremse nach einem der Ansprüche 1 bis 8, wobei die Abtriebswelle des Elektromotors (21) orthogonal zu den Achsen (AX34, AX35, AX36, AX37, AX38) ist, um die sich die Stufenzahnräder (34, 35, 36, 37, 38) drehen können.

10. Trommelbremse nach Anspruch 9, die ein Winkelgetriebe (44) umfasst, das ein Stirnradgetriebe zwischen der Abtriebswelle und dem Getriebe (32) umfasst.

11. Trommelbremse nach einem der Ansprüche 1 bis 10, wobei die Abtriebsachse des Getriebes (32) parallel zu den Achsen (AX34, AX35, AX36, AX37, AX38) ist, um die die Stufenzahnräder (34, 35, 36, 37, 38) frei drehend montiert sind.

12. Trommelbremse nach einem der Ansprüche 1 bis 11, wobei sich die Abtriebswelle (24) des Elektromotors (21) entlang einer Achse (AY) erstreckt, die orthogonal zur Abtriebsachse (AX) des Getriebes (32) ist.

13. Verfahren zur Herstellung eines Getriebemotors für eine Trommelbremse nach Anspruch 5, das Folgendes aufweist:
- Fertigen der Platte (53) und der Achsen (34, 35, 36, 37, 38), die fest mit der Platte verbunden sind,
- Anordnen der Stufenzahnräder (34, 35, 36, 37, 38) um die Achsen (AX34, AX35, AX36, AX37, AX38),
- Bereitstellen eines Gehäuses (54) mit einem Boden (54.1) und einer Abdeckung (54.2),
- Anordnen der Platte (53) mit den Stufenzahnrädern (34, 35, 36, 37, 38) in den Boden (54.1) des Gehäuses (54),
- Anordnen der Abdeckung (54.2) des Gehäuses (54).

14. Verfahren zur Herstellung einer elektromechanisch betätigten Trommelbremse, umfassend Folgendes:
- Herstellen einer Trommelbremse, die eine Trommel, eine Platte (2), zwei Segmente (3, 4), ein mechanisches Stellglied (7) einer auf der Platte (2) befestigten Feststellbremse der Trommelbremse aufweist,
- Herstellen eines Getriebemotors nach dem Verfahren nach Anspruch 13,
- Anordnen des Getriebemotors, sodass das das Stufenzahnrad am Getriebeausgang über ein Winkelgetriebe ein Zahnrad des mechanischen Aktuators antreibt, und sodass die Achsen (AX34, AX35, AX36, AX37, AX38), um die die Stufenzahnräder (34, 35, 36, 37, 38) frei drehend montiert sind, parallel zur Trommelachse liegen,
- Befestigen des Getriebemotors auf der Platte der Trommelbremse.

## Claims

1. A drum brake comprising a drum, a plate (2), two shoes (3, 4), a mechanical actuator (7) of a parking brake of the drum brake attached to the plate (2) and a geared motor for the mechanical actuator (7), the geared motor including an electric motor (21) comprising an output shaft (24) extending along a first axis, and a reduction gearbox (32) including an output axis extending along a second axis, **characterized in that** said reduction gearbox (32) has tangentially meshing stepped gears (34, 35, 36, 38, 38), each stepped gear comprising a toothed wheel and a pinion which are coaxial rotatably integral and superimposed with each other, said stepped gears (34, 35, 36, 37, 38) being mounted rotatably movable about axes (AX34, AX35, AX36, AX37, AX38) parallel to each other,
wherein the geared motor is mounted to the plate, such that the axes (AX34, AX35, AX36, AX37, AX38) about which the stepped gears (34, 35, 36, 37, 38) are freely rotatably mounted are parallel to the axis of the drum.

2. The drum brake according claim 1, wherein the reduction gearbox (32) only includes stepped gears (34, 35, 36, 37, 38).

3. The drum brake according to claim 1 or 2, wherein the stepped gears are at least partially alternating so that the geared motor has a generally substantially flat shape.

4. The drum brake according to claim 3, wherein the geared motor comprises a train of tangentially meshing stepped gears (34, 35, 36, 38, 38), each stepped gear comprising a toothed wheel and a pinion which are coaxial rotatably integral and superimposed with each other, the pinion of a stepped gear meshing with the toothed wheel of an adjacent step, the stepped gears (34, 35, 36, 37, 38) being mounted rotatably movable about axes (AX34, AX35, AX36, AX37, AX38) parallel to each other.

5. The drum brake according to any one of claims 1 to 4, wherein the reduction gearbox (32) comprises a plate (53) and wherein the axes (AX34, AX35, AX36, AX37, AX38) about which the stepped gears (34, 35, 36, 37, 38) are freely rotatably mounted, are integral with the plate (53).

6. The drum brake according to claim 5, wherein the plate (53) includes at least two portions (53.1, 53.2) arranged in distinct parallel planes.

7. The drum brake according to claim 5 or 6, comprising a housing (54) comprising a first part (54.1) forming a bottom and a second part forming a cover, the plate (53) being arranged in the bottom of the housing (54).

8. The drum brake according to one of claims 1 to 7, wherein the reduction gearbox (32) comprises four to six stepped gears (34, 35, 36, 37, 38).

9. The drum brake according to any of claims 1 to 8, wherein the output shaft of the electric motor (21) is orthogonal to the axes (AX34, AX35, AX36, AX37, AX38) about which the stepped gears (34, 35, 36, 37, 38) are rotatable.

10. The drum brake according to claim 9, having an angle transmission (44) comprising a crown gear between the output shaft and the reduction gearbox (32).

11. The drum brake according to one of claims 1 to 10, wherein the output axis of the reduction gearbox (32) is parallel to the axes (AX34, AX35, AX36, AX37, AX38) about which the stepped gears (34, 35, 36, 37, 38) are freely rotatably mounted.

12. The drum brake according to one of claims 1 to 11, wherein the output shaft (24) of the electric motor (21) extends along an axis (AY) which is orthogonal to the output axis (AX) of the reduction gearbox (32).

13. A method for making a geared motor for a drum brake according to claim 5, including :
- manufacturing the plate (53) and the axes (34, 35, 36, 37, 38) integrally with the plate,
- installing the stepped gears (34, 35, 36, 37, 38) around the axes (AX34, AX35, AX36, AX37, AX38),
- providing a housing (54) including a bottom (54.1) and a cover (54.2),
- installing the plate (53) fitted with the stepped gears (34, 35, 36, 37, 38) in the bottom (54.1) of the housing (54)
- installing the cover (54.2) of the housing (54).

14. A method for making an electromechanically actuated drum brake including :
- making a drum brake comprising a drum, a plate (2), two shoes (3, 4), a mechanical actuator (7) of a parking brake of the drum brake attached to the plate (2),
- making a geared motor according to the method according to claim 13,
- installing the geared motor so that the stepped gear at the output of the reduction gearbox drives a toothed wheel of the mechanical actuator via an angle transmission, and so that the axes (AX34, AX35, AX36, AX37, AX38) about which the stepped gears (34, 35, 36, 37, 38) are freely rotatably mounted are parallel to the axis of the drum,
- attaching the geared motor to the plate of the drum brake.
